# EUROPÄISCHE PATENTANMELDUNG

(11) **EP 2 282 410 A2**
(43) Veröffentlichungstag der Anmeldung: **09.02.2011**
(21) Anmeldenummer: 10170093.8
(22) Anmeldetag: 20.07.2010
(51) Int. Cl.: H04B 3/54

(54) **Vorrichtung zur Verbindung von nach verschiedenen Verfahren arbeitenden Systemen zur Übermittlung von Informationen über eine Stromleitung in einem Wechselspannungsstromnetz**

(30) Priorität: 27.07.2009 DE 102009026255
(71) Anmelder: EnBW Energie Baden-Württemberg AG, 76131 Karlsruhe (DE)
(72) Erfinder: Walch, Lars, 76307 Karlsbad (DE); Heiss, Jürgen, 76229 Karlsruhe (DE)
(74) Vertreter: Meyer-Dulheuer, Karl-Hermann

(57) **Zusammenfassung**

Gegenstand der Erfindung ist eine Vorrichtung zur Verbindung von nach verschiedenen Verfahren arbeitenden Systemen zur Übermittlung von Informationen über eine Stromleitung in einem Wechselspannungsstromnetz. Aufgabe der vorliegenden Erfindung war es, eine Vorrichtung zur Verfügung zu stellen, die eine platzsparende Einbaulösung für den Schaltmittelschrank darstellt und in einer Bridgefunktion die vorteilhaften Kommunikationsmöglichkeiten der Powerline Communication und des Digitalstroms miteinander verbindet. Eine solche platzsparende Vorrichtung ermöglicht eine systemübergreifende Kommunikation und Steuerung über verschiedene Stromkreise hinweg.

Gelöst wird die Aufgabe durch die erfindungsgemäße Vorrichtung, die dadurch gekennzeichnet ist, dass sie in einem Schaltmittelgehäuse eine Vorrichtung zur gezielten Modulation der Wirkleistung bei einem oder mehreren Verbrauchern und eine Vorrichtung zur Überlagerung der Wechselspannungsfrequenz mit einer oder mehreren Trägerfrequenzen, die mit einem Nutzsignal moduliert sind, beinhaltet.

## Beschreibung

Gegenstand der Erfindung ist eine Vorrichtung zur Übermittlung von Informationen über eine Stromleitung in einem Wechselspannungsstromnetz, wobei die Vorrichtung nach verschiedenen Verfahren arbeitende Systeme verbindet. Die platzsparende Vorrichtung ermöglicht eine systemübergreifende Kommunikation und Steuerung über verschiedene Stromkreise hinweg.

Zur Übermittlung von Informationen über eine Stromleitung in einem Wechselspannungsstromnetz sind in der Technik verschiedene Verfahren bekannt. So beschreibt die WO 2006/034866 A1 ein Verfahren, bei dem die Informationen durch eine gezielte Modulation der Wirkleistung bei einem oder mehreren Verbrauchern, die an ein Wechselspannungsstromnetz angeschlossen sind, übertragen werden. Diese Technik, die in einer Ausführungsvariante, in der die Variation der Wirkleistung in der Nähe des Nulldurchgangs der Sinuswelle der Wechselspannung auf einen beliebigen Wert erfolgt, als Digitalstrom bekannt ist, weist jedoch einige Nachteile auf. Für jeden einzelnen Stromkreis einer Hausinstallation ist hierfür ein eigener Modulator nötig. Eine Kommunikation über verschiedene Stromkreise hinweg ist nicht möglich. Ferner ist der Betrieb an einer Steigleitung im Haus, die mehrere Verteilerkästen verbindet, nicht möglich, weil die Leistung zu hoch für Digitalstrom ist. Es können damit nicht einzelne Wohneinheiten oder Etagen über das Digitalstromsystem verbunden werden.

Ein weiteres Verfahren zur Informationsübermittlung über Stromleitungen in Wechselspannungsstromnetzen, das mit einer Überlagerung der Wechselspannungsfrequenz mit einer oder mehreren Trägerfrequenzen, die mit dem Nutzsignal moduliert sind, arbeitet, ist in der Technik als Trägerfrequenzverfahren bekannt und wird auch als Powerline Communication (PLC) bezeichnet. Eine Ausführungsart dieser Trägerfrequenzanlagen, die insbesondere für Hausautomation und Internetverbindungen genutzt wird, verbindet die Ethernetschnittstelle mit der Kommunikation über die Stromleitung. Nachteilig ist an der Powerline Communication, dass es durch Abstrahlungen zu Funkstörungen und Elektrosmog kommen kann. Ferner bietet die PLC nicht die gleichen intelligenten Schalt-, Mess- und Automatisierungsfunktionen wie Digitalstrom. Zudem ist das System komplexer aufgebaut und daher teurer als Digitalstrom und es verbraucht mehr Energie.

Bei der Installation jedes dieser Kommunikationssysteme für eine Haus- oder Wohnungsinstallation tritt das Problem auf, dass diese in der Regel mit in die Schaltmittelschränke eingebaut werden müssen. Werden die Systeme gleich bei der Erstinstallation mit eingebaut, so lassen sich Platzprobleme im Schaltmittelschrank durch größere Dimensionierung desselben vermeiden. Bei einer Nachrüstung stellt sich jedoch häufig das Problem, dass alle oder fast alle Einbauplätze schon belegt sind. Eine nachträgliche Erweiterung ist aufwendig und ein größerer Schaltmittelschrank nicht immer möglich oder gewünscht.

Ausgehend von dieser Problematik ist es die Aufgabe der vorliegenden Erfindung, eine Vorrichtung zur Verfügung zu stellen, die eine platzsparende Einbaulösung für den Schaltmittelschrank darstellt und in einer Bridgefunktion die vorteilhaften Kommunikationsmöglichkeiten der Powerline Communication und des Digitalstroms miteinander verbindet.

Gelöst wird die Aufgabe durch die erfindungsgemäße Vorrichtung zur Übermittlung von Informationen über eine Stromleitung in einem Wechselspannungsstromnetz, wobei die Vorrichtung nach verschiedenen Verfahren arbeitende Systeme verbindet, die **dadurch gekennzeichnet ist, dass** sie in einem Schaltmittelgehäuse eine Vorrichtung zur gezielten Modulation der Wirkleistung bei einem oder mehreren Verbrauchern und eine Vorrichtung zur Überlagerung der Wechselspannungsfrequenz mit einer oder mehreren Trägerfrequenzen, die mit einem Nutzsignal moduliert sind, beinhaltet.

Bei der Vorrichtung zur gezielten Modulation der Wirkleistung bei einem oder mehreren Verbrauchern handelt es sich besonders bevorzugt um ein Digitalstrom Modul mit Digitalstrom Modem und Digitalstrom Meter. Und die Vorrichtung zur Überlagerung der Wechselspannungsfrequenz mit einer oder mehreren Trägerfrequenzen, die mit einem Nutzsignal moduliert sind, ist ebenso bevorzugt ein Powerline Communication Modul mit Powerline Communication Modem und Powerline Communication Koppelnetzwerk.

Durch die Kombination dieser Funktionselemente in einem einzigen Schaltmittelgehäuse lassen sich mehrere Vorteile erzielen. Dadurch, dass aufgrund des integrierten Aufbaus an Stelle der Einzelgeräte mit zusätzlicher Verkabelung nur ein einzelnes Schaltmittelgehäuse für den Einbau nötig ist, lässt sich eine erfindungsgemäße Vorrichtung in der Regel problemlos noch zusätzlich in einem freien Platz in vorhandene Installationsplätze im Schaltmittelschrank einbauen. Dazu ist es besonders vorteilhaft, wenn das Schaltmittelgehäuse ein Normgehäuse zur Hutschienenmontage ist.

Da die Kommunikationseinrichtungen als integriertes Bauteil vorliegen, vereinfacht sich der Aufbau des Systems erheblich. Es sind keine zusätzlichen Leitungen und Verbindungen anzubringen, was neben der Materialeinsparung auch noch den Effekt hat, dass Fehler bei der Installation verhindert werden.

Die vorteilhafte Kombination von zwei verschiedenen Kommunikationssystemen, namentlich Digitalstrom und PLC, ermöglicht die durchgängige Kommunikation innerhalb eines ganzen Hauses. Innerhalb der Stromkreise wird über Digitalstrom kommuniziert und zwischen den Stromkreisen mittels PLC. Dazu werden die Digitalstrom- und PLC-Komponenten ganz besonders bevorzugt nicht nur in einem gemeinsamen Gehäuse untergebracht, sondern auch hardund/oder softwaremäßig so verbunden, dass eine Bridgefunktion zwischen den beiden Kommunikationssystemen erzielt wird, die im Vergleich zu den Einzelkomponenten Zusatzfunktionen ermöglicht. Mittels der Bridgefunktion für die Kommunikationssysteme lassen sich bei einer Hausinstallation über PLC auch Räume ansprechen, die nicht über eine Digitalstromanbindung verfügen.

Die Kombination aus Digitalstrom und PLC erlaubt ferner die Abdeckung einer großen Bandbreite an Übertragungsgeschwindigkeiten. Während Digitalstrom im niederbitratigen Bereich (bis einige kBit/s) arbeitet und speziell auf die Übertragung von Schaltinformationen und kleineren Informationseinheiten ausgelegt ist, ist die Powerline Communication auf Übertragungsraten bis derzeit ca. 200 MBit/s geeignet. Im Gegensatz zu der Verbauung von Einzelkomponenten können bei der erfindungsgemäßen Vorrichtung werksseitig die Komponenten aufeinander abgestimmt werden, um eine optimale Übertragungsperformance sowohl innerhalb als auch zwischen den Systemen zu erzielen.

Einer der Zusatznutzen, der sich aus der Kombination eines Digitalstrom Moduls mit einem PLC Modul ergibt, ist die Möglichkeit, mit dem Digitalstrom Meter die Stromstärke und die Spannung im Stromkreis mit hoher Auflösung und hoher Samplingfrequenz zu messen und anschließend über das PLC Modul zu übertragen. Die messtechnischen Fähigkeiten der Digitalstrom Meter übersteigen die Übertragungsleistungen des Digitalstromsystems bei weitem, sodass erst mit einem PLC Übertragungskanal die volle Leistungsfähigkeit ausgenutzt werden kann.

Ebenso bietet die Kombination die Möglichkeit, gezielt einzelne Digitalstromgeräte auch über das Internet zu schalten. Ist man sich beispielsweise nach Verlassen des Hauses nicht sicher, ob man das Bügeleisen oder den Heizlüfter abgeschaltet hat, kann man sich durch eine Schaltzustandsabfrage über ein Smartphone oder einen PDA Gewissheit darüber verschaffen und nötigenfalls den Ausschaltbefehl senden.

Eine bevorzugte Ausgestaltungsvariante der erfindungsgemäßen Vorrichtung sieht vor, dass das Schaltmittelgehäuse mit einer externen seriellen Datenschnittstelle und/oder mit einer externen Ethernet-Datenschnittstelle ausgestattet ist.

Besonders vorteilhaft ist es, wenn das Schaltmittelgehäuse mit einer Betriebsanzeige für Powerline Communication und/oder Digitalstrom ausgestattet ist.

In einer weiteren bevorzugten Ausgestaltungsvariante ist an das Powerline Communication Modul ein intelligenter Stromzähler angeschlossen.

Im Folgenden soll die Erfindung anhand eines Ausführungsbeispiels, das keinesfalls einschränkend zu verstehen ist, näher erläutert werden.

In der Zeichnung sind die Stromleitung mit durchgezogenen Linien, die Datenkommunikation mit gestrichelten Linien und der Austausch von Steuersignalen und Statusinformationen mit punktierten Linien dargestellt.

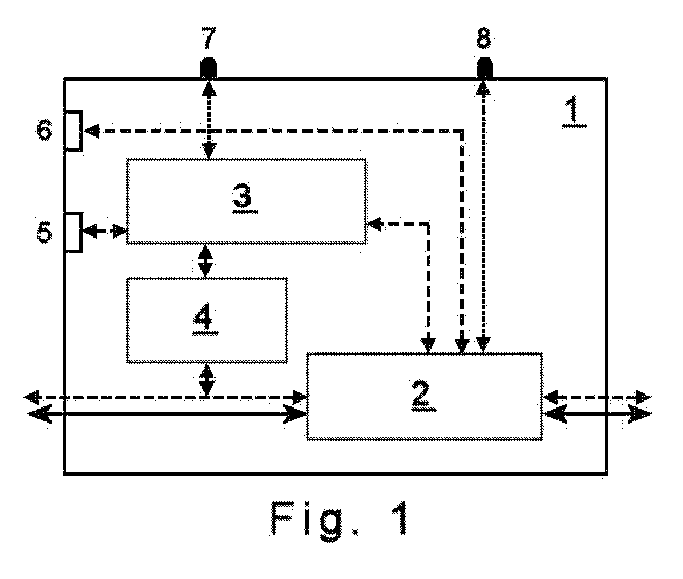

In Fig. 1 ist eine Powerline Communication-Digitalstrom-Bridge dargestellt, bei der die Komponenten in einem normierten Schaltmittelgehäuse für die Hutschienenmontage verbaut sind, das sich bequem in den Verteilerschrank einbauen lässt. In dem Schaltmittelgehäuse (1) ist in die Stromleitung ein Digitalstrom Modem / Meter (2) eingeschleift. Ferner ist ein Powerline Communication Modem (3) über ein Powerline Communication Koppelnetzwerk (4) mit der Stromleitung verbunden. Außen am Schaltmittelgehäuse (1) sind eine externe Ethernetschnittstelle (5), eine externe serielle Schnittstelle (6), eine Betriebsanzeige für Powerline Communication (7) und eine Betriebsanzeige für Digitalstrom (8) angebracht. Der Digitalstrom Modem / Meter (2) ist mit dem Powerline Communication Modem (3) intern über eine serielle Datenverbindung verbunden, die vorzugsweise nach dem RS 232c Standard arbeitet.

### Bezugszeichenliste

- (1): Schaltmittelgehäuse
- (2): Digitalstrom Modem / Meter
- (3): Powerline Communication Modem
- (4): Powerline Communication Koppelnetzwerk
- (5): externe Ethernetschnittstelle
- (6): externe serielle Schnittstelle
- (7): Betriebsanzeige Powerline Communication
- (8): Betriebsanzeige Digitalstrom

## Patentansprüche

1. Vorrichtung zur Übermittlung von Informationen über eine Stromleitung in einem Wechselspannungsstromnetz, wobei die Vorrichtung nach verschiedenen Verfahren arbeitende Systeme verbindet, **dadurch gekennzeichnet, dass** sie in einem Schaltmittelgehäuse eine Vorrichtung zur gezielten Modulation der Wirkleistung bei einem oder mehreren Verbrauchern und eine Vorrichtung zur Überlagerung der Wechselspannungsfrequenz mit einer oder mehreren Trägerfrequenzen, die mit einem Nutzsignal moduliert sind, beinhaltet.

2. Vorrichtung nach Anspruch 1, **dadurch gekennzeichnet, dass** die Vorrichtung zur gezielten Modulation der Wirkleistung bei einem oder mehreren Verbrauchern ein Digitalstrom Modul mit Digitalstrom Modem und Digitalstrom Meter ist.

3. Vorrichtung nach Anspruch 1 und 2, **dadurch gekennzeichnet, dass** die Vorrichtung zur Überlagerung der Wechselspannungsfrequenz mit einer oder mehreren Trägerfrequenzen, die mit einem Nutzsignal moduliert sind, ein Powerline Communication Modul mit Powerline Communication Modem und Powerline Communication Koppelnetzwerk ist.

4. Vorrichtung nach einem der Ansprüche 1 bis 3, **dadurch gekennzeichnet, dass** das Schaltmittelgehäuse ein Normgehäuse zur Hutschienenmontage ist.

5. Vorrichtung nach einem der Ansprüche 1 bis 4, **dadurch gekennzeichnet, dass** das Schaltmittelgehäuse mit einer externen seriellen Datenschnittstelle und/oder mit einer externen Ethernet-Datenschnittstelle ausgestattet ist.

6. Vorrichtung nach einem der Ansprüche 1 bis 5, **dadurch gekennzeichnet, dass** das Schaltmittelgehäuse mit einer Betriebsanzeige für Powerline Communication und/oder Digitalstrom ausgestattet ist.

7. Vorrichtung nach einem der Ansprüche 1 bis 6, **dadurch gekennzeichnet, dass** an das Powerline Communication Modul ein intelligenter Stromzähler angeschlossen ist.
